# EUROPÄISCHE PATENTSCHRIFT

(11) **EP 4 571 166 B1**
(45) Veröffentlichungstag und Bekanntmachung des Hinweises auf die Patenterteilung: **25.03.2026**
(21) Anmeldenummer: 24219651.7
(22) Anmeldetag: 13.12.2024
(51) Int. Cl.: F16L 33/22, F16L 35/00, F16L 57/02

(54) **SYSTEM ZUM SICHEREN VERBINDEN EINES SCHLAUCHS MIT EINEM ANSCHLUSSELEMENT**
SYSTEM FOR SECURELY JOINING A HOSE TO A TERMINAL ELEMENT
SYSTÈME DE RACCORDEMENT SÉCURISÉ D'UN TUYAU SOUPLE À UN ÉLÉMENT DE RACCORDEMENT

(30) Priorität: 15.12.2023 DE 202023107420 U
(43) Veröffentlichungstag der Anmeldung: 18.06.2025
(73) Patentinhaber: RESRG Automotive SE & Co. KG, 95111 Rehau (DE)
(72) Erfinder: Kirchgesner, Paul, 95145 Oberkotzau (DE); Steiner, Sebastian, 95111 Rehau (DE); Vogel, Matthias, 95233 Helmbrechts (DE)
(74) Vertreter: Grünecker Patent- und Rechtsanwälte PartG mbB

(56) Entgegenhaltungen:
- EP-B1- 3 408 577
- KR-A- 20180 116 874
- US-A- 4 163 457
- US-A- 4 805 933
- US-B2- 11 035 500

## Beschreibung

Die vorliegende Erfindung betrifft ein System zum sicheren Verbinden eines Schlauchs mit einem Anschlusselement, wobei ein Schlauch mittels eines an dem Anschlusselement angeformten Anschlussstutzens fluidleitend mit dem Anschlusselement verbunden ist, wobei der Anschlussstutzen in den Schlauchendabschnitt eingesteckt ist.

Ein gattungsgemäßes System ist in den Dokumenten DE 195 170 55 A1, EP 1 096 195 B1 oder US 11 035 500 B2 offenbart.

Nachteilig an diesen Systemen ist jedoch, dass bei der Verlegung von Schläuchen gewisse Mindestbiegeradien einzuhalten sind, um ein Knicken zu vermeiden bzw. muss alternativ ausreichend Platz für die Verlegung des Schlauches vorgesehen werden (z.B. Abstand zu angrenzenden Bauteilen). Bei beschränkten Bauraumsituationen kann es daher zum Abknicken des Schlauches kommen. Über das aus dem Stand der Technik bekannte System von Schlauch und Anschlussstutzen lassen sich zudem nur geringe Fluiddrücke abbilden. Höhere Fluiddrücke sind nur mit Zusatzmaßnahmen wie beispielsweise Kabelbindern oder Schlauchklemmen realisierbar.

Aufgabe der vorliegenden Erfindung ist es daher ein System zum sicheren Verbinden eines Schlauches mit einem Anschlusselement anzugeben, das höhere Fluiddrücke realisieren kann und gleichzeitig ein ungewolltes Knicken des Schlauches verhindert. Diese Aufgabe wird vorliegend gelöst durch ein System zum sicheren Verbinden eines Schlauchs mit einem Anschlusselement, wobei ein Schlauch mittels eines an dem Anschlusselement angeformten Anschlussstutzens fluidleitend mit dem Anschlusselement verbunden ist, wobei der Anschlussstutzen in den Schlauchendabschnitt eingesteckt ist, wobei eine auf den Schlauch aufsteckbare Klemmschale vorgesehen ist, wobei die Klemmschale den Schlauchendabschnitt mit einem Klemmbereich von außen übergreift und den Schlauchendabschnitt zwischen dem Anschlussstutzen und dem Klemmbereich der Klemmschale zusätzlich klemmend fixiert, wobei die Klemmschale zudem einen an den Klemmbereich anschließenden Schlauchführungsabschnitt aufweist, der einen an den Schlauchendabschnitt angrenzenden Schlauchabschnitt aufnimmt, wobei der Schlauchführungsabschnitt so ausgebildet ist, dass er eine definierte Biegung dieses Schlauchabschnitts vorgibt.

Der Klemmbereich der Klemmschale erhöht in Kombination mit dem Anschlussstutzen die Klemmwirkung des Schlauchendabschnitts. Gleichzeitig wird der Schlauchabschnitt durch die Geometrie des Schlauchführungsabschnitts definiert geführt und kann hierdurch nicht abknicken. Der Schlauchführungsabschnitt ist bevorzugt ebenfalls schalenförmig ausgebildet und übergreift hierdurch den Schlauchabschnitt. Das erfindungsgemäße System bietet eine kostengünstige Lösung zur Erhöhung des Systemfluiddrucks. Hierbei sind keine Zusatzelement wie beispielsweise Kabelbinder oder Schlauchklemmen nötigt. Selbstredend ist die Innendimension des Klemmbereichs an die Außendimension des Schlauchendabschnitts angepasst, damit der Klemmbereich den Schlauchendabschnitt klemmend fixieren kann.

Die Klemmschale ist bevorzugt einstückig ausgebildet. Insbesondere kann die Klemmschale in einem Spritzgussverfahren einstückig hergestellt sein. Der Klemmbereich der Klemmschale kann so ausgebildet sein, dass dieser in einem Querschnitt den Schlauchendabschnitt in einem Winkelbereich von mindestens 190° bis maximal 260°, bevorzugt von mindestens 200° bis maximal 240° übergreift. Der vorgenannte Winkelbereich ermöglicht einen optimalen Kompromiss zwischen geringen Kräften für das Aufstecken oder Aufrasten des Klemmbereichs auf dem Schlauchendabschnitt, bei gleichzeitig ausreichend hoher Klemmwirkung. Die Klemmschale ist vorzugsweise aus einem thermoplastischen Material gebildet. Bevorzugt aus einem thermoplastischen Material, das Polypropylen (PP), Polyamid (PA), Acrylnitril-Butadien-Styrol (ABS), Polycarbonat (PC) oder einen PC-ABS-Compound umfasst.

Der Schlauchführungsabschnitt weist bevorzugt eine Länge im Bereich von 30 mm bis 300 mm, weiter vorzugsweise im Bereich von 40 mm bis 150 mm auf.

Der Anschlussstutzen kann einen vom Anschlussstutzen abstehenden Kragen aufweisen, der als Endanschlag für den Schlauchendabschnitt dient. Der Kragen kann vollständig umlaufend ausgebildet sein. Kann jedoch auch nur teilweise umlaufend oder segmentiert umlaufend ausgebildet sein.

Der Klemmbereich kann wenigstens einen Durchbruch aufweisen, der es ermöglicht die korrekte Positionierung des Schlauchendabschnitts auf dem Anschlussstutzen zu erkennen. Durch den Durchbruch hindurch ist es möglich optisch zu erkennen, ob der Schlauchendabschnitt genügend weit auf dem Anschlussstutzen montiert ist. Für den Fall, dass zumindest der Klemmbereich aus einem transparenten Material besteht, wäre ein Durchbruch selbstredend nicht notwendig.

Der Anschlussstutzen kann auf seiner Außenseite eine Verzahnung oder eine Riffelung oder Rastnocken aufweisen. Derartige Ausgestaltungen sind aus dem Stand der Technik bekannt und dienen ebenfalls der Fixierung des Schlauchendabschnitts auf dem Anschlussstutzen. Hierbei kann ergänzend der Klemmbereich auf seiner dem Schlauchendabschnitt zugewandten Seite einen Vorsprung (beispielsweise eine Rippe), vorzugsweise einen umlaufenden Vorsprung, aufweisen, der so in Relation zu dem Anschlussstutzen angeordnet ist, dass der Vorsprung einen Teil des Schlauchendabschnitts in den Raum zwischen der Verzahnung oder der Riffelung oder den Rastnocken des Anschlussstutzens verpresst. Hierdurch wird die Fluiddichtigkeit des Systems noch weiter erhöht.

Das Anschlusselement kann insbesondere eine Spritzdüse für eine Reinigungsflüssigkeit oder eine Druckluftdüse oder ein Fluidverteilerelement sein. Ferner Teil der Erfindung ist ein Außenverkleidungsteil für ein Fahrzeug, umfassend ein System nach einem der Ansprüche 1 bis 10. Das Außenverkleidungsteil kann insbesondere ein Türunterkantenblende oder eine Stoßfängerverkleidung oder eine Heckklappenaußenverkleidung oder eine Kotflügelverkleidung oder eine Kühlerverkleidung oder eine Schwellerverkleidung oder eine Frontmaske oder ein Heckspoiler oder ein Seitenspoiler sein. Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

### Ausführungsbeispiele

Im Folgenden wird die Erfindung anhand lediglich Ausführungsbeispiele darstellender Zeichnung erläutert. Es zeigen schematisch:
- Fig. 1: eine Rückansicht eines Außenverkleidungsteils mit einem erfindungsgemäßen System zum sicheren Verbinden eines Schlauchs mit einem Anschlusselement;
- Fig. 2: einen Längsschnitt durch einen Teilbereich des erfindungsgemäßen Systems;
- Fig. 3: eine Draufsicht auf die aufsteckbare Klemmschale des Systems;
- Fig. 4: einen Querschnitt durch den Klemmbereich der Klemmschale;
- Fig. 5: eine Untenansicht des Klemmbereichs der Klemmschale.

In den Figuren werden gleiche oder funktionsgleiche Elemente mit den gleichen Bezugszeichen versehen.

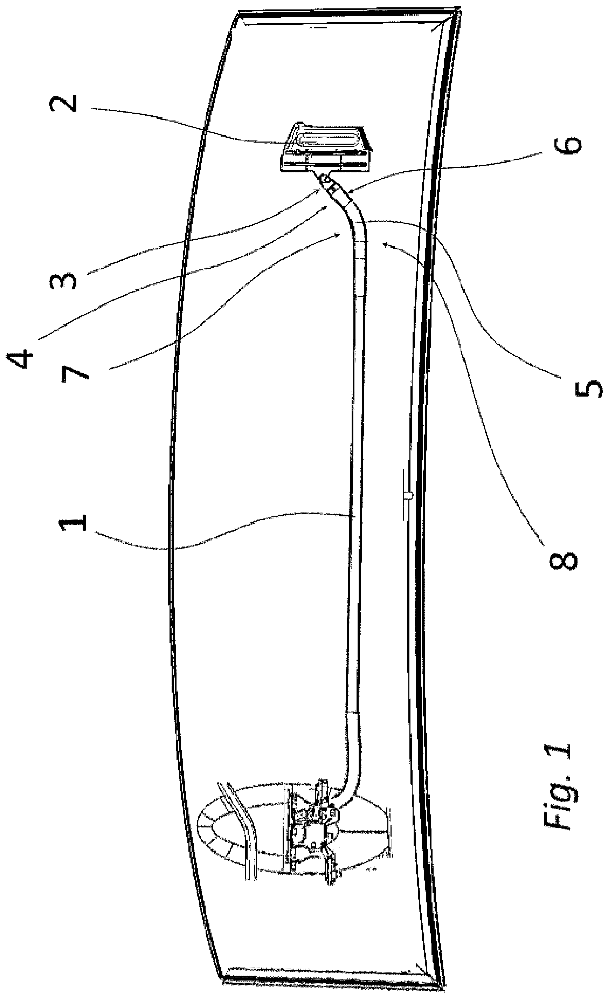

In der Fig. 1 ist ein Außenverkleidungsteil für ein Fahrzeug in Form eines Spoilers bzw. einer Spoileraußenhaut dargestellt.

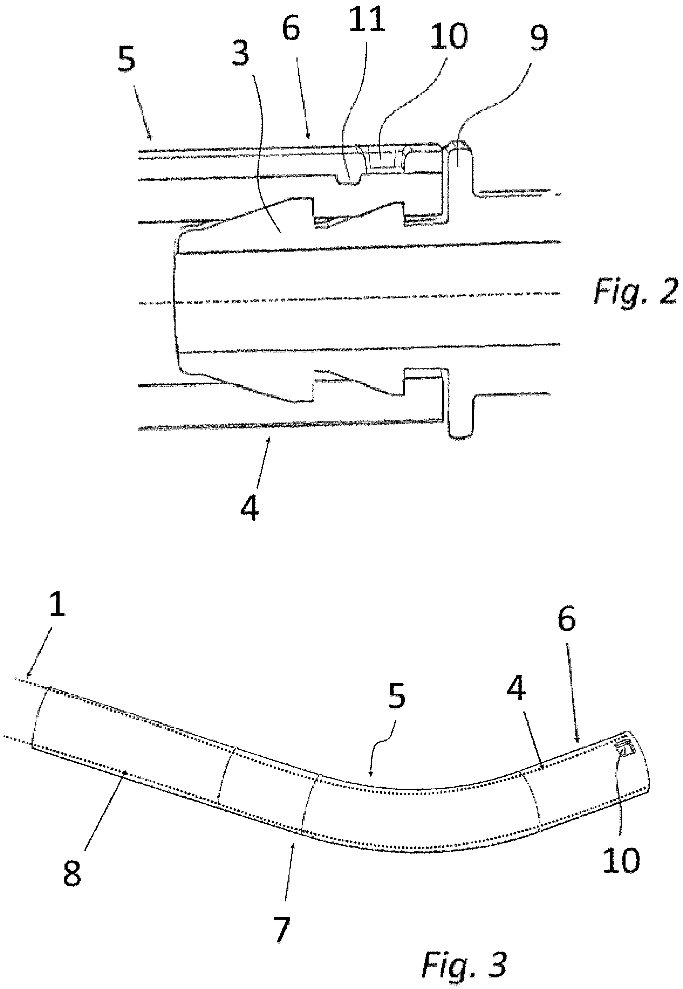

Auf der Innenseite des Spoilers ist ein erfindungsgemäßes System zum sicheren Verbinden eines Schlauchs 1 mit einem Anschlusselement 2 vorgesehen. Hierbei ist ein Schlauch 1 mittels eines an dem Anschlusselement 2 angeformten Anschlussstutzens 3 (siehe auch Fig. 2) fluidleitend mit dem Anschlusselement 2 verbunden. Der Anschlussstutzen 3 ist hierbei in den Schlauchendabschnitt 4 eingesteckt (siehe auch Fig. 2).

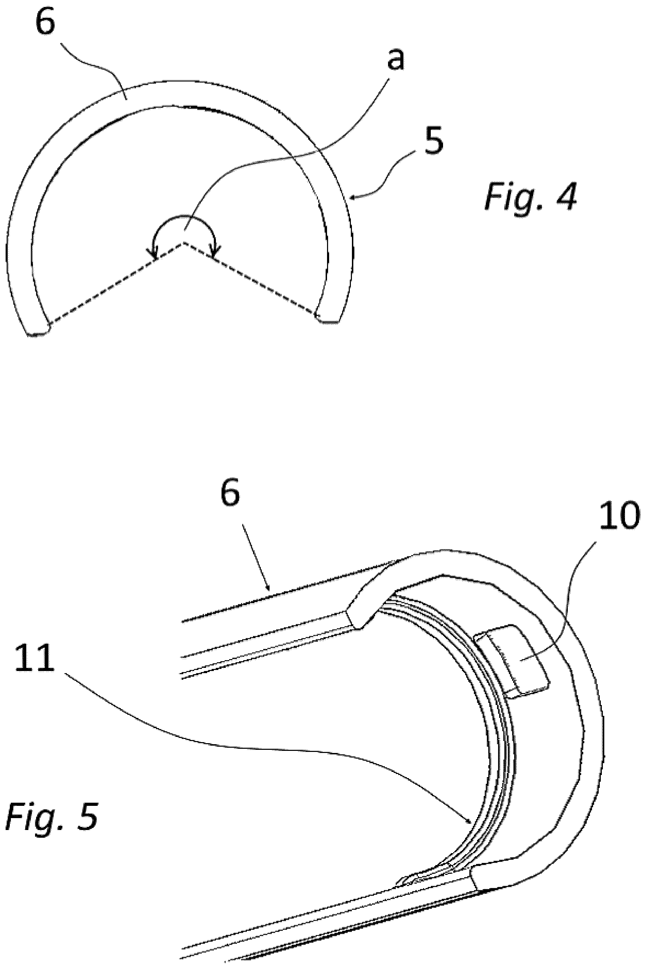

Es ist eine auf den Schlauch 1 aufsteckbare Klemmschale 5 vorgesehen (vgl. insbesondere Fig. 3), wobei die Klemmschale 5 den Schlauchendabschnitt 4 mit einem Klemmbereich 6 von außen übergreift und den Schlauchendabschnitt 4 zwischen dem Anschlussstutzen 3 und dem Klemmbereich 6 der Klemmschale 5 zusätzlich klemmend fixiert (vgl. Fig. 2 und Fig. 3 - dort ist der Schlauch nur schematisch angedeutet). Die Klemmschale 5 weist zudem einen an den Klemmbereich 6 anschließenden Schlauchführungsabschnitt 7 auf, der einen an den Schlauchendabschnitt 4 angrenzenden Schlauchabschnitt 8 aufnimmt, wobei der Schlauchführungsabschnitt 7 so ausgebildet ist, dass er eine definierte Biegung (hier mit einem definierten Biegeradius) dieses Schlauchabschnitts 8 vorgibt (vgl. Fig. 3). Die Klemmschale 5 ist einstückig aus einem thermoplastischen Material ausgebildet. Der Klemmbereich 6 der Klemmschale 5 ist so ausgebildet, dass dieser in einem Querschnitt den Schlauchendabschnitt 4 in einem Winkelbereich a von mindestens 190° bis maximal 260° übergreift (vgl. Fig. 4). Der angrenzende Schlauchführungsabschnitt 7 ist in diesem Ausführungsbeispiel ebenfalls entsprechend ausgebildet.

Der Schlauchführungsabschnitt 7 weist eine Länge im Bereich von 30 mm bis 300 mm, vorzugsweise im Bereich von 40 mm bis 150 mm auf.

Der Anschlussstutzen 3 weist einen vom Anschlussstutzen 3 abstehenden Kragen 9 auf, der als Endanschlag für den Schlauchendabschnitt 4 dient (vgl. Fig. 2).

Der Klemmbereich 6 weist wenigstens einen Durchbruch 10 auf, der es ermöglicht die korrekte Positionierung des Schlauchendabschnitts 4 auf dem Anschlussstutzen 3 zu erkennen (vgl. Fig. 2 und Fig. 5).

Der Anschlussstutzen 3 weist auf seiner Außenseite eine Verzahnung auf. Der Klemmbereich 6 weist auf seiner dem Schlauchendabschnitt 4 zugewandten Seite einen umlaufen Vorsprung 11 in Gestalt einer Rippe auf, der so in Relation zu dem Anschlussstutzen 3 angeordnet ist, dass der Vorsprung 11 einen Teil des Schlauchendabschnitts 4 in den Raum zwischen der Verzahnung des Anschlussstutzens 3 verpresst (vgl. Fig. 2 und Fig. 5).

Das Anschlusselement 2 kann insbesondere eine Spritzdüse für eine Reinigungsflüssigkeit oder eine Druckluftdüse oder ein Fluidverteilerelement sein.

## Patentansprüche

1. System zum sicheren Verbinden eines Schlauchs (1) mit einem Anschlusselement (2),
wobei ein Schlauch (1) mittels eines an dem Anschlusselement (2) angeformten Anschlussstutzens (3) fluidleitend mit dem Anschlusselement (2) verbunden ist, wobei der Anschlussstutzen (3) in den Schlauchendabschnitt (4) eingesteckt ist,
wobei eine auf den Schlauch (1) aufsteckbare Klemmschale (5) vorgesehen ist, wobei die Klemmschale (5) den Schlauchendabschnitt (4) mit einem Klemmbereich (6) von außen übergreift und den Schlauchendabschnitt (4) zwischen dem Anschlussstutzen (3) und dem Klemmbereich (6) der Klemmschale (5) zusätzlich klemmend fixiert, **dadurch gekennzeichnet, dass** die Klemmschale (5) zudem einen an den Klemmbereich (6) anschließenden Schlauchführungsabschnitt (7) aufweist, der einen an den Schlauchendabschnitt (4) angrenzenden Schlauchabschnitt (8) aufnimmt, wobei der Schlauchführungsabschnitt (7) so ausgebildet ist, dass er eine definierte Biegung dieses Schlauchabschnitts (8) vorgibt.

2. System nach Anspruch 1, **dadurch gekennzeichnet, dass** die Klemmschale (5) einstückig ausgebildet ist.

3. System nach einem der vorstehenden Ansprüche, **dadurch gekennzeichnet, dass** der Klemmbereich (6) der Klemmschale (5) so ausgebildet ist, dass dieser in einem Querschnitt den Schlauchendabschnitt (4) in einem Winkelbereich (a) von mindestens 190° bis maximal 260° übergreift.

4. System nach einem der vorstehenden Ansprüche, **dadurch gekennzeichnet, dass** die Klemmschale (5) aus einem thermoplastischen Material gebildet ist, vorzugsweise aus einem thermoplastischen Material, das Polypropylen (PP), Polyamid (PA), Acrylnitril-Butadien-Styrol (ABS), Polycarbonat (PC) oder einen PC-ABS-Compound umfasst.

5. System nach einem der vorstehenden Ansprüche, **dadurch gekennzeichnet, dass** der Schlauchführungsabschnitt (7) eine Länge im Bereich von 30 mm bis 300 mm, vorzugsweise im Bereich von 40 mm bis 150 mm aufweist.

6. System nach einem der vorstehenden Ansprüche, **dadurch gekennzeichnet, dass** der Anschlussstutzen (3) einen vom Anschlussstutzen (3) abstehenden Kragen (9) aufweist, der als Endanschlag für den Schlauchendabschnitt (4) dient.

7. System nach einem der vorstehenden Ansprüche, **dadurch gekennzeichnet, dass** der Klemmbereich (6) wenigstens einen Durchbruch (10) aufweist, der es ermöglicht die korrekte Positionierung des Schlauchendabschnitts (4) auf dem Anschlussstutzen (3) zu erkennen.

8. System nach einem der vorstehenden Ansprüche, **dadurch gekennzeichnet, dass** der Anschlussstutzen (3) auf seiner Außenseite eine Verzahnung oder eine Riffelung oder Rastnocken aufweist.

9. System nach Anspruch 8, **dadurch gekennzeichnet, dass** der Klemmbereich (6) auf seiner dem Schlauchendabschnitt (4) zugewandten Seite einen Vorsprung (11), vorzugsweise einen umlaufenden Vorsprung (11), aufweist, der so in Relation zu dem Anschlussstutzen (3) angeordnet ist, dass der Vorsprung (11) einen Teil des Schlauchendabschnitts (4) in den Raum zwischen der Verzahnung oder der Riffelung oder den Rastnocken des Anschlussstutzens (3) verpresst.

10. System nach einem der vorstehenden Ansprüche, **dadurch gekennzeichnet, dass** das Anschlusselement (2) eine Spritzdüse für eine Reinigungsflüssigkeit oder eine Druckluftdüse oder ein Fluidverteilerelement ist.

11. Außenverkleidungsteil für ein Fahrzeug, umfassend ein System nach einem der Ansprüche 1 bis 10.

## Claims

1. System for securely connecting a hose (1) to a connection element (2), wherein a hose (1) is connected to the connection element (2) in a fluid-conducting manner by means of a connection piece (3) formed on the connection element (2), wherein the connection piece (3) is inserted into the hose end section (4), wherein a clamping shell (5) is provided which can be attached to the hose (1) , wherein the clamping shell (5) engages the hose end section (4) from the outside with a clamping area (6) and additionally clamps the hose end section (4) between the connection piece (3) and the clamping area (6) of the clamping shell (5), **characterized in that** the clamping shell (5) also has a hose guide section (7) adjoining the clamping area (6), which accommodates a hose section (8) adjacent to the hose end section (4), wherein the hose guide section (7) is designed in such a way that it specifies a defined bend of this hose section (8).

2. System according to claim 1, **characterized in that** the clamping shell (5) is designed as a single piece.

3. System according to one of the preceding claims, **characterized in that** the clamping area (6) of the clamping shell (5) is designed such that it overlaps the hose end section (4) in a cross-section at an angle (a) of at least 190° to a maximum of 260°.

4. System according to one of the preceding claims, **characterized in that** the clamping shell (5) is formed from a thermoplastic material, preferably from a thermoplastic material comprising polypropylene (PP), polyamide (PA), acrylonitrile butadiene styrene (ABS), polycarbonate (PC), or a PC-ABS compound.

5. System according to one of the preceding claims, **characterized in that** the hose guide section (7) has a length in the range of 30 mm to 300 mm, preferably in the range of 40 mm to 150 mm.

6. System according to one of the preceding claims, **characterized in that** the connection piece (3) has a collar (9) protruding from the connection piece (3), which serves as an end stop for the hose end section (4).

7. System according to one of the preceding claims, **characterized in that** the clamping area (6) has at least one opening (10) which makes it possible to recognize the correct positioning of the hose end section (4) on the connection piece (3).

8. System according to one of the preceding claims, **characterized in that** the connection piece (3) has a toothing or a corrugation or locking cams on its outer side.

9. System according to claim 8, **characterized in that** the clamping area (6) has a projection (11), preferably a circumferential projection (11), on its side facing the hose end section (4) which is arranged in relation to the connecting piece (3) in such a way that the projection (11) presses part of the hose end section (4) into the space between the teeth or the corrugations or the locking cams of the connecting piece (3).

10. System according to one of the preceding claims, **characterized in that** the connecting element (2) is a spray nozzle for a cleaning fluid or a compressed air nozzle or a fluid distributor element.

11. Exterior trim part for a vehicle, comprising a system according to one of claims 1 to 10.

## Revendications

1. Système pour raccorder de manière sûre un tuyau (1) à un élément de raccordement (2), dans lequel un tuyau (1) est raccordé à l'élément de raccordement (2) de manière à permettre le passage d'un fluide au moyen d'une pièce de raccordement (3) formée sur l'élément de raccordement (2), dans lequel la pièce de raccordement (3) est insérée dans la section d'extrémité du tuyau (4), dans lequel une coque de serrage (5) est prévue, qui peut être fixée au tuyau (1), dans lequel la coque de serrage (5) s'engage dans la section d'extrémité du tuyau (4) depuis l'extérieur avec une zone de serrage (6) et serre en outre la section d'extrémité du tuyau (4) entre la pièce de raccordement (3) et la zone de serrage (6) de la coque de serrage (5), **caractérisé en ce que** la coque de serrage (5) comporte également une section de guidage de tuyau (7) adjacente à la zone de serrage (6), qui reçoit une section de tuyau (8) adjacente à la section d'extrémité du tuyau (4), dans lequel la section de guidage de tuyau (7) est conçue de manière à définir une courbure définie de cette section de tuyau (8).

2. Système selon la revendication 1, **caractérisé en ce que** la coque de serrage (5) est conçue comme une pièce unique.

3. Système selon l'une des revendications précédentes, **caractérisé en ce que** la zone de serrage (6) de la coque de serrage (5) est conçue de manière à recouvrir la section d'extrémité du tuyau (4) dans une section transversale selon un angle (a) compris entre 190° et 260° au maximum.

4. Système selon l'une des revendications précédentes, **caractérisé en ce que** la coque de serrage (5) est formée à partir d'un matériau thermoplastique, de préférence à partir d'un matériau thermoplastique comprenant du polypropylène (PP), du polyamide (PA), de l'acrylonitrile butadiène styrène (ABS), du polycarbonate (PC) ou un composé PC-ABS.

5. Système selon l'une des revendications précédentes, **caractérisé en ce que** la section de guidage de tuyau (7) a une longueur comprise entre 30 mm et 300 mm, de préférence entre 40 mm et 150 mm.

6. Système selon l'une des revendications précédentes, **caractérisé en ce que** la pièce de raccordement (3) comporte un collier (9) faisant saillie à partir de la pièce de raccordement (3), qui sert de butée d'extrémité pour la section d'extrémité de tuyau (4).

7. Système selon l'une des revendications précédentes, **caractérisé en ce que** la zone de serrage (6) présente au moins une ouverture (10) qui permet de reconnaître le positionnement correct de la section d'extrémité du tuyau (4) sur la pièce de raccordement (3).

8. Système selon l'une des revendications précédentes, **caractérisé en ce que** la pièce de raccordement (3) comporte une denture ou une ondulation ou des cames de verrouillage sur son côté extérieur.

9. Système selon la revendication 8, **caractérisé en ce que** la zone de serrage (6) comporte une saillie (11), de préférence une saillie circonférentielle (11), sur son côté tourné vers la section d'extrémité du tuyau (4), qui est disposée par rapport à la pièce de raccordement (3) de telle manière que la saillie (11) presse une partie de la section d'extrémité du tuyau (4) dans l'espace entre les dents ou les ondulations ou les cames de verrouillage de la pièce de raccordement (3).

10. Système selon l'une des revendications précédentes, **caractérisé en ce que** l'élément de raccordement (2) est une buse de pulvérisation pour un fluide de nettoyage ou une buse à air comprimé ou un élément de distribution de fluide.

11. Pièce de garniture extérieure pour un véhicule, comprenant un système selon l'une des revendications 1 à 10.
